# EUROPÄISCHE PATENTANMELDUNG

(11) **EP 2 056 075 A2**
(43) Veröffentlichungstag der Anmeldung: **06.05.2009**
(21) Anmeldenummer: 08017363.6
(22) Anmeldetag: 02.10.2008
(51) Int. Cl.: G01F 1/075, G01F 15/14

(54) **Oberteil für einen Durchflussmesser und Durchflussmesser**

(30) Priorität: 05.11.2007 DE 102007052623
(71) Anmelder: DIGMESA AG, 2563 Ipsach (CH)
(72) Erfinder: Plüss, Heinz, 3322 Schönbühl (CH)
(74) Vertreter: Lempert, Jost

(57) **Zusammenfassung**

Um die Sicherheit der elektrischen Teile im Oberteil eines Durchflussmessgeräts gegenüber durch das Messgerät fließender, insbesondere elektrisch leitfähiger Flüssigkeit zu erhöhen, sieht die Erfindung bei einem Oberteil für einen solchen Durchflussmesser mit einem Verschlussteil, einem Deckteil und einem zwischen diesen angeordneten Sensor vor, dass zwischen Hauptkörper (11) und Deckteil (14) ein Einsatz (12) angeordnet ist, der den Sensor (13) aufnimmt.

## Beschreibung

Die Erfindung betrifft ein Oberteil eines Durchflussmessers mit einem Hauptkörper, einem Deckteil und einem zwischen Hauptkörper und Deckteil angeordneten Sensor sowie einen ein solches Oberteil aufweisenden Durchflussmesser.

Bei bekannten Durchflussmessern ist der Sensor mit seinen Anschlussdrähten und diesen kontaktierenden Kontaktstiften unmittelbar auf der dem Flüssigkeitsraum des Durchflussmessers abgewandten Seite des Oberteils eingelegt bzw. angeordnet und der Sensor sowie seine Anschlussdrähte sind durch ein aufgesetztes Deckteil gegenüber der Umgebung abgedichtet.

Bei einer solchen Ausgestaltung eines Durchflussmessers besteht die zumindest theoretische Möglichkeit, dass durch Haarrisse in der einlagigen Wandung des Oberteils die durch den Durchflussmesser fließende Flüssigkeit mit den genannten elektrischen Elementen, Anschlussdrähte des Sensors und Kontaktstiften, über die der Sensor mit elektrischer Energie wird, in Kontakt kommt und handelt es sich um eine leitende Flüssigkeit, so kann hierdurch eine Gefahr entstehen, wenn die Flüssigkeit selbst im sachgemäßen Gebrauch berührbar ist oder berührbar werden kann.

Der Erfindung liegt daher zugrunde, unter Vermeidung der vorgenannten Nachteile die elektrische Sicherheit eines Durchflussmessers zu erhöhen.

Erfindungsgemäß wird die genannte Aufgabe mit einem gattungsgemäßen Oberteil eines Durchflussmessers gelöst, welches dadurch gekennzeichnet ist, dass zwischen Hauptkörper und Deckteil ein Einsatz angeordnet ist, der den Sensor aufnimmt. Die Erfindung wird weiterhin durch einen Durchflussmesser mit einem Gehäuseunterteil und einem Gehäuseoberteil gelöst, dessen Oberteil in der vorstehend genannten Weise ausgebildet ist.

Durch die Erfindung wird eine doppelte Isolierlage zwischen elektrisch leitenden und beaufschlagten Teilen, insbesondere den Anschlussdrähten des Sensors und der den Durchflussmesser durchfließenden Flüssigkeit geschaffen. Ein gegebenenfalls in der Wandung der Oberteils entstehender Haarriss kann sich nicht ohne weiteres in das Material des Einsatzes fortsetzen, so dass auch im Falle eines Entstehens eines solchen Haarrisses weiterhin eine vollständige Isolation gegeben ist. Auch bei anderen Schädigungen des ein oder anderen Teils bleibt die Isolation durch das jeweils nicht betroffene Teil gegeben. Die Sicherheit wird damit erhöht und die Wahrscheinlichkeit eines Ausfalls der durch die doppelte Wandung gegebenen Sicherheit auf einen Bruchteil der bei bekannten Durchflussmessern mit lediglich einer Wandung gegebenen Wahrscheinlichkeit reduziert.

Der Erfindungsgedanke kann in verschiedener Weise konkret ausgebildet sein. So sieht eine bevorzugte Ausgestaltung der Erfindung vor, dass der Hauptkörper eine Ausnehmung aufweist, in die ein Ansatz des Einsatzes ragt.

Während grundsätzlich der Einsatz mit dem Hauptkörper des Oberteils verklebt sein kann, ist in bevorzugter Ausgestaltung der Erfindung vorgesehen, dass der Einsatz im Hauptkörper rastend gehalten ist, wobei insbesondere Seitenwandungen der Ausnehmung mit hinterschnittenen Nasen versehen sind, die durch federnde Laschen des Einsatzes hintergriffen sind.

Die Aufnahme des Sensors kann dabei in bevorzugter Weise dadurch erfolgen, dass der Einsatz auf seiner dem Hauptkörper abgewandten Seite eine - vorzugsweise flache - Ausnehmung zur Aufnahme eines Sensorkörpers des Sensors aufweist, wobei weiterhin der Einsatz Vertiefungen oder Ausnehmungen aufweist, in die sowohl jeweils ein Anschlussdraht des Sensors als auch das innere Ende eines Kontaktstiftes ragt.

Um einen guten elektrischen Kontakt zwischen dem Anschlussdraht des Sensors und den zur weiteren Kontaktierung vorgesehenen Kontaktstiften zu gewährleisten, sieht eine Weiterbildung vor, dass die Ansschlussdrähte des Sensors und die Kontaktstifte in den Ausnehmungen kraftschlüssig oder klemmend gehalten sind.

Es hat sich herausgestellt, dass zur sicheren Verbindung von Einsatz und Deckteil es durchaus ausreichen kann, dass das Deckteil kraft- oder reibschlüssig auf dem Einsatz aufsitzt, wobei allerdings zusätzlich vorgesehen sein kann, dass Einsatz und Deckteil miteinander verklebt sind.

Um neben der Verbesserung der Isolation der elektrisch leitenden Teile gegenüber dem flüssigkeitsdurchströmten inneren Raum des Durchmessers eine Erhöhung der Sicherheit innerhalb des die elektrischen Anschlussteile (Anschlussdrähte des Sensors und Kontaktstiften) zu erreichen, insbesondere gegenüber Kurzschluss, beispielsweise durch Kondenswasser oder von außen eindringende Feuchtigkeit, sieht die Erfindung in einer bevorzugten Weiterbildung vor, dass ein Zwischenraum zwischen Einsatz und Deckteil mit Silikon ausgefüllt ist.

Schließlich wird die parallele Ausrichtung von mehreren, insbesondere drei vorgesehenen Kontaktstiften zur Steckkontaktierung mit einer auf diesen aufgesteckten Steckbuchse
dadurch verbessert, dass das Deckteil auf seiner in dem Einsatz abgewandten Seite mit jeweils einem Steckstift haltenden und ausrichtenden Domen versehen ist, wobei das Lösen der Steckverbindung in der erforderlichen Weise dadurch erleichtert werden kann, dass vorgesehen ist, dass jedem der Kontaktstifte eine einzelne vom Deckteil parallel zum Kontaktstift abstehende Haltelasche zugeordnet ist, die an ihrem Ende mit einer den Kontaktstift zugewandten Nase zur Verrastung mit einem Steckbuchsenteil versehen ist.

Weitere Vorteile und Merkmale der Erfindung ergeben sich aus den Ansprüchen und aus der nachfolgenden Beschreibung, in der ein Ausführungsbeispiel der Erfindung unter Bezug auf die Zeichnung im Einzelnen erläutern ist. Dabei zeigt:
- Fig. 1: eine schematische Darstellung eines Durchflussmessgeräts in Seitenansicht;
- Fig.2: eine perspektivische Explosionsdarstellung des Oberteils eines Durchflussmessgeräts mit seinen Einzelteilen; und

- Fig.3: einen Schnitt durch ein erfindungsgemäßes Oberteil.

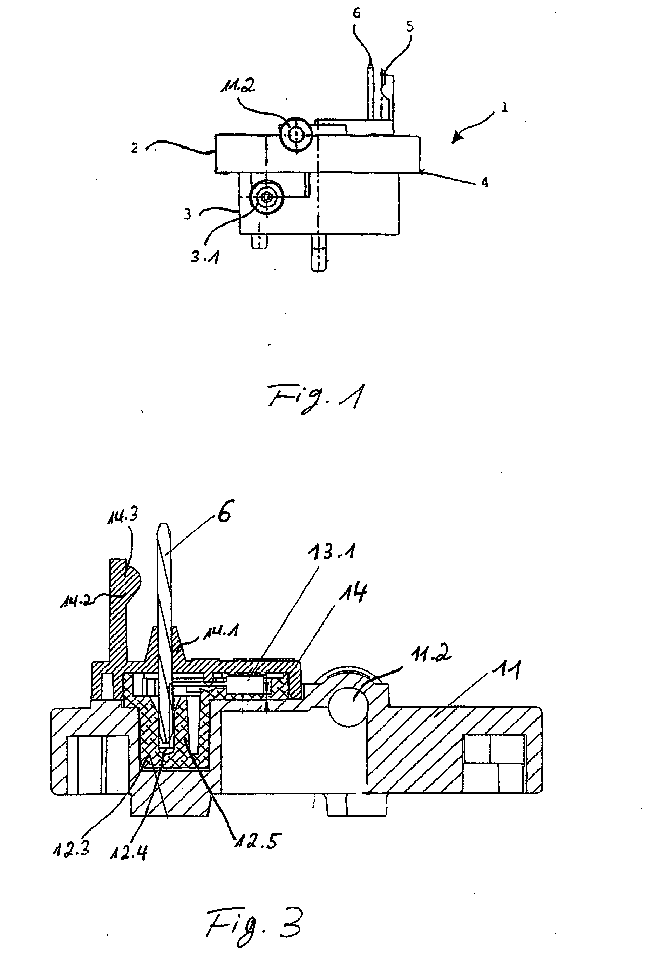

Das in der Fig. 1 dargestellte Durchflussmessgerät 1 zum Messen des Durchflusses von Flüssigkeiten für eine Vorrichtung zum Bereiten von Getränken, insbesondere in einer Kaffee- oder Espresso-Maschine, weist ein Gehäuse 4 aus einem Gehäuseoberteil 2 - im Folgenden kurz Oberteil - sowie ein Gehäuseunterteil 3 auf, welche mittels eines nicht näher dargestellten Bajonettverschlusses lösbar miteinander verbindbar sind. Im Inneren des topfförmig ausgebildeten Gehäuseunterteils 3 des Messgehäuses 4 ist zentral ein Messkörper, insbesondere ein Flügelrad, drehbar auf einem Lagerstift gelagert und wird durch die durch das Unterteil des Messgehäuses 4 fließende Flüssigkeit in Drehung versetzt, die über einen Sensor - berührungslos - detektiert wird, so dass über eine Messelektronik eine Durchflussmessung erfolgen kann. Hierzu sind beispielsweise am drehbar gelagerten Flügelrad auf bekannte Weise Dauermagnete eingesetzt, über die bei Drehung des Flügelrades induktiv eine Spannung erzeugt wird, deren durch die Umlaufgeschwindigkeit des Flügelrads gegebene Größe ein Maß für den Durchfluss durch das Gehäuse ist. Bevorzugt erfolgt die Messung mittels eines Sensors in Form eines Hall-ICs unter Ausnutzung des Hall-Effektes. Um die gemessenen Signale an eine Messelektronik und über diese an eine Steuereinrichtung für das Getränkebereitungsgerät weiterzuleiten, ist an der Oberseite, insbesondere an der Stirnseite des Oberteils 2 ein Steckeranschluss 5 mit vorzugsweise drei Kontaktstiften 6 angebracht. Einer dieser Steckstifte 6 dient als positiver Pol zur Speisung, ein anderer als Minuspol und Masse und der dritte als Signal-Ausgang zur Weiterleitung des gemessenen Signals.

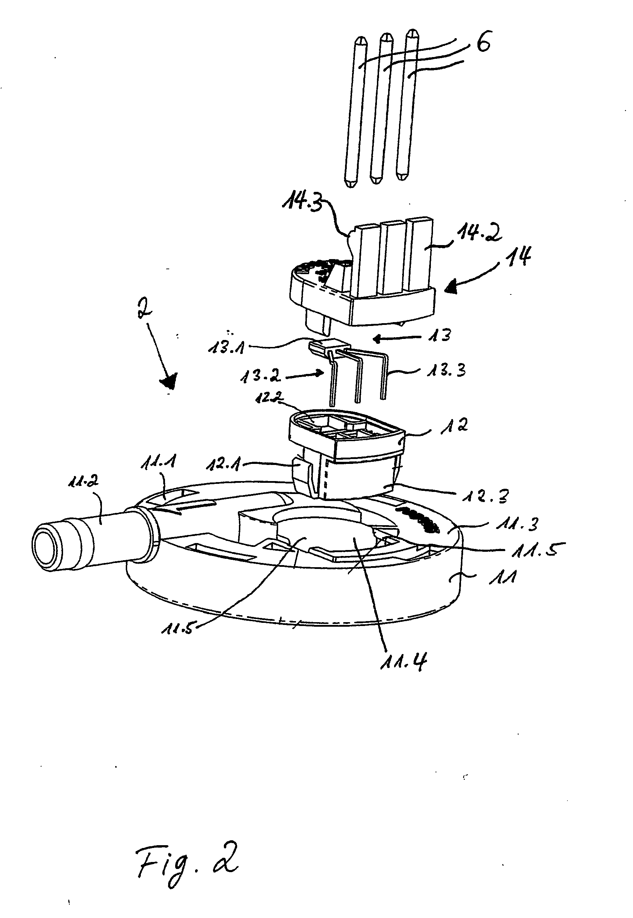

Das Oberteil 2 hat (Fig. 2) einen Hauptkörper 11, der als Verschlussteil für das Unterteil 3 dient und hinterschnittene Ausnehmungen 11.1 zum bajonnetartigen Eingriff von am Unterteil ausgebildeten Nasen zur Verbindung von Ober- und Unterteil 2, 3 hat. Weiterhin ist im Hauptkörper 11 des Oberteils 2 ein Flüssigkeitsanschluss 11.2, hier ein Auslass angeordnet, während ein weiterer Flüssigkeitsanschluss 3.1 (Einlass) im Unterteil 3 vorgesehen ist.

Der Hauptkörper 11 weist von seiner stirnseitigen Oberseite 11.3 her eine Vertiefung 11.4 für einen Einsatz 12 auf, der im Folgenden beschrieben wird. Die Vertiefung 11.4 ist mit hinterschnittenen Nasen 11.5 versehen, hinter denen elastische Laschen 12.1 am Einsatz 12 hinterrasten könnten.

Der Einsatz 12 weist seinerseits auf seiner Oberseite zunächst eine flache Ausnehmung 12.2 auf, die zur Aufnahme des Körpers 13.1 eines Sensors 13 (Sensorkörper 13.1) dient. Im dargestellten Ausführungsbeispiel handelt es sich um einen Hall-Sensor, der mit drei Anschlussdrähten 13.2 versehen ist.

Der Einsatz 12 weist weiterhin einen Ansatz 12.3 auf, mit dem er in die Vertiefung 12.4 einsetzbar ist und an derem unteren Ende die erwähnten federnden Laschen 12.1 festgelegt sind. Der Ansatz ist mit drei relativ schmalen, aber tiefen Vertiefungen 12.4 als Stiftaufnahmen versehen, die zumindest einseitig seitlich durch eine Lasche 12.5 begrenzt sind. In diese Vertiefungen 12.4 ragen abgebogene Enden 13.3 der Anschlussdrähte des Sensors 13 zusammen mit den unteren Enden der Kontaktstifte 6 und beide werden in der Vertiefung klemmend gehalten, so dass zwischen ihnen ein guter elektrischer Kontakt hergestellt wird.

Der Einsatz 12 ist durch ein Deckteil 14 abgedeckt, welches kraftschlüssig an den Seitenwandungen des Einsatzes 12 anliegt. Zusätzlich können beide Teile durch eine Klebeverbindung miteinander verbunden sein, vorzugsweise auch fluiddicht. Das Deckteil 14 überdeckt so den Sensorkörper 13.1. Der Zwischenraum zwischen Deckteil 14 und Einsatz 12 kann durch eine feuchtigkeitsisolierende Masse, wie Silikon, ausgefüllt sein, die derart den Sensorkörper 13.1 umschließt.

Das Deckteil 14 weist die Kontaktstifte 6 umgebende Dome 14.1 auf, durch die diese zusammen mit der Stiftaufnahme 12.4 des Einsatzes 12 parallel zueinander ausgerichtet gehalten werden, wodurch nach Aufstecken eines Buchsenteils auf die Kontaktstifte 6 eine formschlüssige Verbindung zwischen dem erfindungsgemäßen Oberteil und dem genannten Buchsenteil hergestellt wird, die nur durch Zurückbiegen der Laschen 14.2 wieder gelöst werden kann.

Durch die erfindungsgemäße Vorsehung des Einsatzes 12 zwischen Hauptkörper 11 und Deckteil 14 und die Aufnahme des Sensors 13 sowie der elektrischen Kontaktanordnung durch die Drähte 13.1 und die Stifte 6 auf der dem Hauptkörper 11 abgewandten Seite des Einsatzes 13 wird eine doppelte Sicherheit und Isolierung dieser elektrischen Teile gegenüber der Gefahr eines Kontaktes mit Flüssigkeit im Durchflussmesser geschaffen. Wenn beispielsweise in der den genannten elektrischen Teilen zugewandten Wandung des Hauptkörpers durch Versprödung Haarrisse auftreten, durch die Flüssigkeit aus dem Inneren des Durchflussmessers austreten, so werden diese Haarrisse sich nicht ohne weiteres in dem Einsatz fortsetzen, der in diesem Falle eine zusätzliche Abdichtung und damit Sicherheit gegenüber Eindringen von Flüssigkeit aus dem Inneren des Durchflussmessers zu den Kontaktdrähten und -stiften gewährleistet. Ein Eindringen von Feuchtigkeit von außen her wird demgegenüber durch die erwähnte Silikonabdichtmasse verhindert, so dass diese einerseits und der Einsatz andererseits unterschiedliche Funktionen und Wirkungen entfalten.

### Bezugszeichenliste

- 1: Durchflussmessgerät
- 2: Gehäuseoberteil
- 3: Gehäuseunterteil
- 3.1: Flüssigkeitsanschluss
- 4: Gehäuse
- 5: Steckeranschluss
- 6: Kontaktstifte
- 11: Hauptkörper
- 11.1: Ausnehmungen
- 11.2: Flüssigkeitsanschluss
- 11.3: stirnseitige Oberseite
- 11.4: Vertiefung
- 11.5: Nasen
- 12: Einsatz
- 12.1: Laschen
- 12.2: Ausnehmung
- 12.3: Ansatz
- 12.4: Vertiefung
- 12.5: elastische Lasche
- 13: Sensor
- 13.1: Sensorkörper, Drähte
- 13.2: Anschlussdrähte
- 13.3: abgebogene Enden
- 14: Deckteil
- 14.1: Dome
- 14.2: Laschen

## Patentansprüche

1. Oberteil eines Durchflussmessers, mit einem Hauptkörper, einem Deckteil und einem zwischen Hauptkörper und Deckteil angeordneten Sensor, **dadurch gekennzeichnet, dass** zwischen Hauptkörper (11) und Deckteil (14) ein Einsatz (12) angeordnet ist, der den Sensor (13) aufnimmt.

2. Oberteil nach Anspruch 1, **dadurch gekennzeichnet, dass** der Hauptkörper (11) eine Ausnehmung (11.4) aufweist, in die ein Ansatz (12.3) des Einsatzes (12) ragt.

3. Oberteil nach Anspruch 1 oder 2, **dadurch gekennzeichnet, dass** der Einsatz (12) im Hauptkörper (11) rastend gehalten ist.

4. Oberteil nach Anspruch 3 in Verbindung mit Anspruch 2, **dadurch gekennzeichnet, dass** Seitenwandungen der Ausnehmung (11.4) mit hinterschnittenen Nasen (11.3) versehen sind, die durch federnde Laschen (12.1) des Einsatzes (12) hintergriffen sind.

5. Oberteil nach einem nach einem der vorangehenden Ansprüche, **dadurch gekennzeichnet, dass** der Einsatz (12) auf seiner dem Hauptkörper (11) abgewandten Seite eine Ausnehmung (12.2) zur Aufnahme eines Sensorkörpers (13.1) des Sensors (13) aufweist.

6. Oberteil nach einem der vorangehenden Ansprüche, **dadurch gekennzeichnet, dass** der Einsatz (12) Vertiefungen (12.4) aufweist, in die sowohl jeweils ein Anschlussdraht (13.3) des Sensors (13) als auch das innere Ende eines Kontaktstiftes (6) ragt.

7. Oberteil nach Anspruch 6, **dadurch gekennzeichnet, dass** die Anscfilussdrähte (13.3) des Sensors (13) und die Kontaktstifte (6) in den Ausnehmungen (12.4) kraftschlüssig oder klemmend gehalten sind.

8. Oberteil nach einem der vorangehenden Ansprüche, **dadurch gekennzeichnet, dass** das Deckteil (14) kraft-oder reibschlüssig auf dem Einsatz (12) aufsitzt.

9. Oberteil nach einem der vorangehenden Ansprüche, **dadurch gekennzeichnet, dass** Einsatz (12) und Deckteil (14) miteinander verklebt sind.

10. Oberteil nach einem der vorangehenden Ansprüche, **dadurch gekennzeichnet, dass** ein Zwischenraum zwischen Einsatz (12) und Deckteil (14) mit Silikon ausgefüllt ist.

11. Oberteil nach einem der vorangehenden Ansprüche, **dadurch gekennzeichnet, dass** das Deckteil (14) auf seiner in dem Einsatz (12) abgewandten Seite mit jeweils einem Steckstift (6) haltenden und ausrichtenden Domen (14.1) versehen ist.

12. Oberteil nach einem der vorangehenden Ansprüche, **dadurch gekennzeichnet, dass** jedem der Kontaktstifte (6) eine einzelne vom Deckteil (14) parallel zum Kontaktstift (6) abstehende Haltelasche (14.2) zugeordnet ist, die an ihrem Ende mit einer den Kontaktstift (6) zugewandten Nase (14.3) zur Verrastung mit einem Steckbuchsenteil versehen ist.

13. Durchflussmessgerät mit einem Gehäuse-Unterteil (3) und einem Gehäuse-Oberteil (2), **dadurch gekennzeichnet, dass** das Oberteil (2) nach einem der Ansprüche 1 bis 12 ausgebildet ist.
